# EUROPÄISCHE PATENTSCHRIFT

(11) **EP 1 219 573 B1**
(45) Veröffentlichungstag und Bekanntmachung des Hinweises auf die Patenterteilung: **25.05.2005**
(21) Anmeldenummer: 01128013.8
(22) Anmeldetag: 24.11.2001
(51) Int. Cl.: C03C 3/091, C03C 3/093

(54) **Alkalifreie Aluminoborosilicatgläser und ihre Verwendungen**
Alkali-free aluminoborosilicate glasses and their applications
Verres aluminoborosilicates dépourvus d'alcalins et leurs utilisations

(30) Priorität: 22.12.2000 DE 10064804
(43) Veröffentlichungstag der Anmeldung: 03.07.2002
(73) Patentinhaber: Schott AG, 55122 Mainz (DE)
(72) Erfinder: Peuchert, Ulrich, Dr., 55294 Bodenheim (DE)

(56) Entgegenhaltungen:
- EP-A- 1 078 893
- PATENT ABSTRACTS OF JAPAN vol. 1997, no. 10, 31. Oktober 1997 (1997-10-31) -& JP 09 156953 A (NIPPON ELECTRIC GLASS CO LTD), 17. Juni 1997 (1997-06-17)

## Beschreibung

Gegenstand der Erfindung sind alkalifreie Aluminoborosilicatgläser. Gegenstand der Erfindung sind auch Verwendungen dieser Gläser.

An Gläser für Anwendungen als Substrate in der Flüssigkristall-Flachdisplaytechnologie, z. B. in TN (Twisted Nematic)/STN (Super Twisted Nematic) - Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Trägermaterial für integrierte Halbleiterschaltkreise z. B. in TFT-Displays ("chip on glass") erfordert darüber hinaus die thermische Anpassung an das Dünnfilmmaterial Silicium. Dieses wird üblicherweise als amorphes Silicium (a-Si) bei niedrigen Temperaturen bis 300 °C auf dem Glassubstrat abgeschieden. Durch eine nachfolgende Wärmebehandlung bei Temperaturen von ca. 600 °C rekristallisiert das amorphe Silicium partiell. Die resultierende teilweise kristalline poly-Si-Schicht ist aufgrund der a-Si-Anteile charakterisiert durch einen Wert der thermischen Ausdehnung von α _{20/300} ≅ 3,7 x 10⁻⁶/K. Je nach dem Verhältnis von a-Si zu poly-Si kann der thermische Ausdehnungskoeffizient α_{20/300} zwischen 2,9 · 10⁻⁶/K und 4,2 · 10⁻⁶/K variieren. Werden durch Hochtemperaturbehandlungen oberhalb 700 °C bzw. direkte Abscheidung über CVD-Prozesse weitestgehend kristalline Si-Schichten generiert, so gewünscht auch in der Dünnschichtphotovoltaik, ist ein Substrat mit deutlich reduzierter thermischer Dehnung um 3,2 x 10⁻⁶/K oder weniger erforderlich. In Anbetracht der Produktion großflächiger Glassubstrate ist eine hohe mechanische Festigkeit der Gläser erforderlich. Ein Maß für diese Festigkeit ist der E-Modul.

Für Anwendungen in der Display- und Photovoltaiktechnologie ist ferner die Abwesenheit von Alkaliionen Bedingung. Herstellungsbedingte Anteile von Natriumoxid unterhalb 1500 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Einem auf die Halbleiter-Microstruktur nachteilig wirkenden Schrumpf ("compaction") des Substrates während der Herstellung, insbesondere im Falle von TFT-Displays, kann durch Einstellen einer geeigneten temperaturabhängigen Viskositätskennlinie des Glases entgegengewirkt werden. Hinsichtlich der thermischen Prozeß- und Formstabilität sollte es bei einerseits nicht zu hohen Schmelz- und Verarbeitungs (V_{A}) -temperaturen, d. h. bei einem V_{A} ≤ 1350 °C, eine ausreichend hohe Transformationstemperatur, d. h. T_{g} ≥ 690°C aufweisen.

Die Anforderungen an Glassubstrate für die LCD-Displaytechnologie bzw. Dünnschicht-Photovoltaik-Technologie sind auch in "Glass Substrates for AMLCD applications: properties and implications" von J.C. Lapp, SPIE Proceedings, Vol. 3014, Invited paper (1997) beschrieben bzw. in "Photovoltaik-Strom aus der Sonne" von J. Schmid, Verlag C.F. Müller, Heidelberg 1994.

Das genannte Anforderungsprofil wird am ehesten durch Erdalkalialuminoborosilicatgläser erfüllt. Die bekannten und in den folgenden Schriften beschriebenen Gläser für Display- oder Solarzellensubstrate weisen jedoch noch Nachteile auf und erfüllen nicht den gesamten Anforderungskatalog:

Zahlreiche Schriften beschreiben Gläser, mit geringen MgO- und/oder CaO-Gehalten: JP 2000 001 331 A, JP 2000 044 278 A, DE 198 40 113 A1, WO 00/32528, JP 9-169 538 A, JP 4-160 030 A, JP 9-100 135 A, US 5,374,595, JP 9-48632 A, JP 8-295530 A, WO 97/11919 und WO 97/11920 und JP 9110460 A1. Diese Gläser besitzen nicht die gewünschte Schmelzbarkeit, was sehr hohe Temperaturen bei den Viskositäten 10² dPas und 10⁴ dPas bestätigen, und weisen relativ hohe Dichten auf. Gleiches gilt für die MgOfreien Gläser der DE 37 30 410 A1, US 5,116,787 und US 5,116,789. MgO-Freiheit bzw. zu geringe MgO-Gehalte bringen eine geringe mechanische Festigkeit mit sich.

Andererseits zeigen Gläser mit hohen Gehalten an MgO, wie sie in JP 61-123 536 A beschrieben sind, Mängel hinsichtlich ihrer chemischen Beständigkeit sowie ihres Entglasungs- und Entmischungsverhaltens.

Auch die Gläser der WO 98/27019 sind mit ihren sehr geringen Anteilen an BaO und SrO kristallisationsanfällig. Gleiches gilt auch für die relativ BaOarmen Gläser aus EP 714 862 B1.

Gläser mit hohen Gehalten an den schweren Erdalkalioxiden BaO und/oder SrO, wie sie in EP 341313 B1 beschrieben sind, besitzen unerwünscht hohe Dichten und sind nicht gut schmelzbar. Dies gilt auch für die Gläser der JP 10-72237 A.

Auch Gläser mit geringen Borsäuregehalten weisen zu hohe Schmelztemperaturen bzw. aufgrund dessen bei verfahrensbedingt vorgegebenen Schmelz- und Verarbeitungstemperaturen zu hohe Viskositäten auf. Dies betrifft die Gläser aus JP 10-45422 A und JP 9-263421 A.
In Kombination mit niedrigen BaO-Gehalten weisen solche Gläser außerdem eine hohe Entglasungsneigung auf.

Dagegen zeigen Gläser mit hohen Anteilen an Borsäure, wie sie beispielsweise in US 4,824,808 beschrieben sind, keine ausreichende Temperaturbeständigkeit und chemische Beständigkeit, insbesondere gegenüber salzsauren Lösungen.

Auch die Gläser, die relativ wenig SiO₂ enthalten, zeigen, insbesondere wenn sie größere Mengen an B₂O₃ und/oder MgO enthalten und erdalkaliarm sind, keine ausreichend hohe chemische Beständigkeit. Dies betrifft die Gläser aus WO 97/11919 und EP 672 629 A2. Die SiO₂-reicheren Varianten der letztgenannten Schrift weisen nur geringe Al₂O₃-Anteile auf, was nachteilig für das Kristallisationsverhalten ist.

DE 42 13 579 A1 beschreibt Gläser für TFT-Anwendungen mit thermischen Ausdehnungskoeffizienten < 5,5 x 10⁻⁶/K, ausweislich der Beispiele ≥ 4,0 x 10⁻⁶/K. Diese Gläser mit relativ hohen Anteilen an B₂O₃ bei vergleichsweise niedrigen SiO₂-Gehalten sind nicht sehr chemisch resistent, insbesondere nicht gegenüber verdünnter Salzsäure.

DE 196 01 022 A1 beschreibt Gläser aus einem sehr variablen Zusammensetzungsbereich, die zwingend ZrO₂ und SnO enthalten. Aufgrund ihres ZrO₂-Anteils neigen die Gläser zu Glasfehlem.

Aus DE 196 17 344 C1 der Anmelderin sind alkalifreie zinnoxidhaltige SiO₂-arme Al₂O₃-reiche Gläser mit einem thermischen Ausdehnungskoeffizienten _{20/300} von ca. 3,7 · 10⁻⁶/K und sehr guten chemischen Beständigkeiten bekannt. Sie sind geeignet für den Einsatz in der Displaytechnik. Da sie jedoch zwingend ZnO enthalten, sind sie insbesondere für eine Verarbeitung auf einer Floatanlage nicht optimal geeignet. Insbesondere bei höheren Gehalten ZnO (> 1,5 Gew. -%) besteht nämlich die Gefahr der Bildung von ZnO-Belägen auf der Glasoberfläche durch Verdampfung und anschließende Kondensation im Heißformgebungsbereich. Gleiches gilt für die zinkoxidhaltigen bariumfreien oder -armen Gläser der DE 196 03 698 C1 der Anmelderin.

Auch JP 9-156 953 A betrifft alkalifreie Gläser für die Displaytechnik, die relativ Al₂O₃-arm und insbesondere relativ B₂O₃-arm sind. Die Temperaturbeständigkeit dieser Gläser ist, wie die Transformationstemperaturen der Beispielgläser belegen, nicht ausreichend.

In den ungeprüften japanischen Veröffentlichungen JP 10-25132 A, JP 10-114538 A, JP 10-130034 A, JP 10-59741 A, JP 10-324526 A, JP 11-43350 A, JP 10-139467 A, JP 10-231139 A, JP 11-49520 A, JP 2000 159 541 A und JP 11-292563 A werden sehr große und mit vielen fakultativen Komponenten variierbare Zusammensetzungsbereiche für Displaygläser genannt, denen jeweils ein oder mehrere bestimmte Läuterungsmittel zugesetzt werden. Diese Schriften geben jedoch keinerlei Hinweise, wie gezielt Gläser mit den kompletten beschriebenen Anforderungsprofil erhalten werden können.

Es ist Aufgabe der Erfindung, Gläser bereitzustellen, die die genannten physikalischen und chemischen Anforderungen an Glassubstrate für Flüssigkristall-Displays, insbesondere für TFT-Displays, und für Dünnschichtsolarzellen, insbesondere auf Basis von µc-Si gestellt wird, erfüllen, Gläser, die eine hohe Temperaturbeständigkeit, einen prozeßgünstigen Verarbeitungsbereich und eine ausreichende Entglasungsstabilität aufweisen.

Die Aufgabe wird durch Aluminoborosilicatgläser gemäß der unabhängigen Ansprüche gelöst.

Die Gläser enthalten zwischen > 58 und 65 Gew.-% SiO₂. Bei geringeren Gehalten verschlechtert sich die chemische Beständigkeit, bei höheren Anteilen nimmt die thermische Ausdehnung zu geringe Werte an und nimmt die Kristallisationsneigung der Gläser zu. Bevorzugt ist ein Mindestgehalt von 60 Gew.-%.

Die Gläser enthalten > 14 bis 20 Gew.-% Al₂O₃. Al₂O₃ wirkt sich, ohne die Verarbeitungstemperatur zu sehr anzuheben, positiv auf die Temperaturstabilität des Glases aus, so daß bei diesen Gläsern schon bei diesen Gehalten eine hohe Temperaturstabilität erzielt wird. Bei einem geringeren Gehalt erhöht sich die Kristallisationsanfälligkeit der Gläser.

Der B₂O₃-Gehalt ist auf höchstens 11,5 Gew.-% beschränkt, um eine hohe Transformationstemperatur T_{g} zu erzielen. Auch würden höhere Gehalte die chemische Beständigkeit verschlechtern. Der B₂O₃-Gehalt beträgt mehr als 6 Gew.-%, um eine gute Schmelzbarkeit und die gute Kristallisationsbeständigkeit des Glases zu gewährleisten. Vorzugsweise beträgt der B₂O₃-Gehalt mehr als 7 Gew.-%. Vorzugsweise beträgt der B₂O₃-Gehalt höchstens 11 Gew.-%.

Ein wesentlicher Glasbestandteil sind die netzwerkwandelnden Erdalkalioxide. Vor allem durch Variation ihrer Anteile wird ein thermischer Ausdehnungskoeffizient α_{20/300} zwischen 2,8 x 10⁻⁶/K und 3,9 x 10⁻⁶/K erzielt. Die einzelnen Oxide liegen in den folgenden Anteilen vor:

Die Gläser enthalten > 3 bis 6 Gew.-% MgO und > 4,5 bis 10 Gew.-% CaO. Eher hohe Anteile an den beiden Komponenten wirken sich positiv auf die gewünschten Eigenschaften niedrige Dichte und niedrige Verarbeitungstemperatur aus. Eher geringe Anteile begünstigen die Kristallisationsbeständigkeit und die chemische Beständigkeit. Es ist bevorzugt, dass der MgO-Anteil kleiner als der CaO-Anteil ist, d. h., dass das Gewichtsverhältnis MgO/CaO < 1 beträgt. Es ist besonders bevorzugt, dass es ≤ 0,7 beträgt. Bevorzugt ist ein MgO-Gehalt von höchstens 5 Gew.-%. Bevorzugt ist ein CaO-Gehalt von wenigstens 5 Gew.-%.

Weiter enthalten die Gläser BaO, und zwar wenigstens > 1,5 Gew.-%. Der BaO-Höchstgehalt ist auf 6 Gew.-%, vorzugsweise auf 5 Gew.-%, beschränkt. So werden die gute Schmelzbarkeit gewährleistet und die Dichte niedrig gehalten. Insbesondere zur Erhöhung der Kristallisationsstabilität ist ein Mindestgehalt an BaO von > 2,5 Gew.-% bevorzugt.

Die Gläser können weiterhin bis zu < 4 Gew.-%, vorzugsweise bis 3 Gew.-%, des ebenfalls vergleichsweise schweren Erdalkalioxides SrO enthalten. Die Beschränkung dieser fakultativen Komponente auf diesen geringen Höchstgehalt ist für eine gute Schmelzbarkeit und für die hohe chemische Beständigkeit der Gläser vorteilhaft. Insbesondere zur Erzielung einer geringen Dichte ist eine Beschränkung des SrO-Gehalts auf maximal 1,5 Gew.-% bevorzugt.
So enthält man mit den SrO-freien bzw. -armen Gläsern mit 0 - 1,5 Gew.-% mit BaO-Gehalten ab > 1,5 Gew.-% Gläser mit sehr niedriger Dichte.

Die Gläser mit vergleichsweise hohen BaO-Gehalten von > 2,5 Gew.-% zeigen bei SrO-Gehalten zwischen 0 und < 4 Gew.-%, vorzugsweise bis 3 Gew.-%, eine besonders hohe Kristallisationsstabilität.

Der Gesamtgehalt an BaO und SrO beträgt bei beiden Glasgruppen wenigstens > 3 Gew.-%, um eine ausreichende Kristallisationsstabilität zu gewährleisten. SrO und BaO wirken sich positiv auf die HCI-Beständigkeit aus und verringern, im Verlgeich zu MgO und CaO, den Brechwert.
Bei beiden Glasgruppen ist es bevorzugt, daß der Gesamterdalkaligehalt (MgO + CaO + SrO + BaO) mehr als 11 Gew.-% beträgt.

Die Gläser können bis zu < 2 Gew.-% ZnO, bevorzugt bis zu 0,5 Gew.-% enthalten, ZnO hat als Netzwerkwandler eine gerüstlockernde Funktion, und es hat einen geringen Einfluß auf die thermische Ausdehnung als die Erdalkalioxide. Es hat einen ähnlichen Einfluß auf die Viskositätskennlinie wie B₂O₃. Vorzugsweise, insbesondere bei einer Verarbeitung der Gläser im Floatverfahren, ist der ZnO-Anteil auf höchstens 1,5 Gew.-% beschränkt. Höhere Anteile würden die Gefahr störender ZnO-Beläge auf der Glasoberfläche erhöhen, die sich durch Verdampfung und anschließende Kondensation im Heißformgebungsbereich bilden können.

Die Gläser sind alkalifrei. Unter alkalifrei wird hierbei verstanden, daß sie im wesentlichen frei sind von Alkalioxiden, wobei sie Verunreinigungen von weniger als 1500 ppm enthalten können.

Die Gläser können bis zu 2 Gew.-% ZrO + TiO₂ enthalten, wobei sowohl der TiO₂-Gehalt als auch der ZrO₂-Gehalt einzeln bis zu 2 Gew.-% betragen kann. ZrO₂ erhöht vorteilhaft die Temperaturstabilität des Glases. Aufgrund seiner Schwerlöslichkeit erhöht es jedoch die Gefahr von ZrO₂-haltigen Schmelzrelikten (sog. "Zirkonnester") im Glas. Daher beträgt der ZrO₂-Anteil bevorzugt nur bis zu 0,5 Gew.-%, besonders bevorzugt wird auf die Zugabe von ZrO₂ verzichtet. Geringe Gehalte an ZrO₂, die von der Korrosion zirkonhaltigen Wannenmaterials herrühren, sind unproblematisch. TiO₂ setzt vorteilhaft die Solarisationsneigung, d. h. die Abnahme der Transmission im sichtbaren Wellenlängenbereich aufgrund von UV-VIS-Strahlung, herab. Bei Gehalten von mehr als 2 Gew.-% können durch Komplexbildung mit Fe³⁺-Ionen, die im Glas in geringen Gehalten infolge von Verunreinigungen der eingesetzten Rohstoffe vorhanden sind, Farbstiche auftreten. Bevorzugt beträgt der TiO₂-Anteil nur bis zu 0,5 Gew.-%.

Die Gläser können herkömmliche Läutermittel in herkömmlichen Mengen enthalten: So können sie bis zu 1,5 Gew.-% As₂O₃, Sb₂O₃, SnO₂ und/oder CeO₂ enthalten. Auch ist der Zusatz von je 1,5 Gew.-% Cl⁻ (beispielsweise als BaCl₂), F⁻ (z. B. als CaF₂) oder SO₄²⁻ (z. B. als BaSO₄) möglich. Die Summe aus As₂O₃, Sb₂O₃, CeO_{2,} SnO_{2,} Cl⁻, F⁻ und SO₄²⁻ soll jedoch 1,5 Gew.-% nicht überschreiten.

Wenn auf die Läutermittel As₂O₃ und Sb₂O₃ verzichtet wird, sind die Gläser nicht nur mit den verschiedenen Ziehverfahren, sondern auch mit dem Floatverfahren verarbeitbar.

Beispielsweise im Hinblick auf eine einfache Gemengezubereitung ist es von Vorteil, daß sowohl auf ZrO₂ als auch auf SnO₂ verzichtet werden kann und dennoch Gläser mit dem genannten Eigenschaftsprofil, insbesondere mit hoher thermischer und chemischer Beständigkeit und mit geringer Kristallisationsneigung, erhalten werden.

### Ausführungsbeispiele:

Aus herkömmlichen, von unvermeidlichen Verunreinigungen abgesehen im wesentlichen alkalifreien, Rohstoffen wurden bei 1620°C Gläser in Pt/Ir-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt. Die Schmelzen wurden in vorgeheizte Graphit-Formen gegossen und auf Raumtemperatur abgekühlt.

Die Tabelle zeigt acht Beispiele erfindungsgemäßer Gläser mit ihren Zusammensetzungen (in Gew.-% auf Oxidbasis) und ihren wichtigsten Eigenschaften. Das Läutermittel SnO₂ mit einem Anteil von 0,5 Gew.-% ist nicht aufgeführt. Folgende Eigenschaften sind angegeben:
- der thermische Ausdehnungskoeffizient α _{20/300} [10⁻⁶/K]
- die Dichte ρ [g/cm³]
- die dilatometrische Transformationstemperatur T_{g}[°C] nach DIN 52324
- die Temperatur bei der Viskosität 10⁴ dPas (bezeichnet als T 4 [°C])
- die Temperatur bei der Viskosität 10² dPas (bezeichnet als T2 [ °C], berechnet aus der Vogel-Fulcher-Tammann-Gleichung
- der Brechwert n_{d}
- eine Säurebeständigkeit "HCl" als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²].
- die Beständigkeit gegenüber gepufferter Fluorwasserstoffsäure "BHF" als Gewichtsverlust (Abtragswert) von allseitig polierten Glasplättchen der Abmessungen 50 mm x 50 mm x 2 mm nach Behandlung mit 10 % iger NH₄F · HF für 20 Min. bei 23 °C [mg/cm²].
- den Elastizitätsmodul E [GPa]

**Tabelle:**

| | | | | | | | | |
|---|---|---|---|---|---|---|---|---|
| Beispiele: Zusammensetzungen (in Gew.-% auf Oxidbasis) und wesentliche Eigenschaften von erfindungsgemäßen Gläsern. | | | | | | | | |

| | 1 | 2 | 3 | 4 | 5 | 6 | 7 | 8 |
|---|---|---|---|---|---|---|---|---|
| SiO₂ | 61,3 | 61,3 | 61,3 | 63,0 | 59,0 | 60,9 | 63,8 | 62,7 |
| B₂O₃ | 8,0 | 8,0 | 7,8 | 10,0 | 10,0 | 8,0 | 6,1 | 8,0 |
| Al₂O₃ | 16,0 | 16,2 | 16,0 | 15,6 | 18,0 | 16,2 | 14,5 | 15,6 |
| MgO | 3,4 | 3,4 | 3,8 | 3,1 | 3,2 | 3,1 | 5,5 | 3,2 |
| CaO | 7,5 | 7,3 | 7,3 | 4,6 | 4,6 | 8,2 | 5,8 | 5,0 |
| SrO | - | 0,8 | - | 1,3 | 2,0 | - | - | - |
| BaO | 3,3 | 2,5 | 3,3 | 1,9 | 2,7 | 3,1 | 3,5 | 5,0 |
| ZnO | - | - | - | - | - | - | 0,3 | - |
| α _{20/300} [10⁻⁶/K] | 3,74 | 3,70 | 3,71 | 3,35 | 3,52 | 3,80 | 3,69 | 3,50 |
| [g/cm²] | 2,49 | 2,49 | 2,49 | 2,42 | 2,46 | 2,48 | 2,48 | 2,48 |
| T_{g} [°C] | 709 | 708 | 716 | 704 | 711 | 713 | 714 | 713 |
| T 4 [°C] | 1262 | 1265 | 1260 | 1277 | 1258 | 1259 | 1273 | 1286 |
| T 2 [°C] | 1619 | 1617 | 1630 | 1646 | 1609 | 1613 | 1631 | 1648 |
| n_{d} | 1,524 | 1,524 | 1,524 | 1,513 | 1,521 | 1,525 | 1,518 | 1,518 |
| HCl [mg/cm²] | 0,34 | 0,49 | 0,38 | n.b. | n.b. | 0,42 | 0,15 | 0,38 |
| BHF [mg/cm²] | n.b. | n.b. | n.b. | 0,67 | 0,79 | 0,69 | 0,74 | 0,68 |
| E [Gpa] | 79 | 79 | 79 | 76 | 77 | 79 | 80 | 76 |
| n. b.= nicht bestimmt | | | | | | | | |

Wie die Ausführungsbeispiele verdeutlichen, besitzen die erfindungsgemäßen Gläser folgende vorteilhafte Eigenschaften:
- eine thermische Dehnung α _{20/300} zwischen 2,8 x 10⁻⁶/K und 3,9 x 10⁻⁶/K, damit angepaßt an das Ausdehnungsverhalten von amorphen und auch zunehmend polykristallinem Silicium.
- mit T_{g} ≥ 690 °C eine hohe Transformationstemperatur, also eine hohe Temperaturbeständigkeit. Dies ist wesentlich für einen möglichst geringen herstellungsbedingten Schrumpf ("compaction") und für die Verwendung der Gläser als Substrate für Beschichtungen mit amorphen Si-Schichten und deren anschließende Temperung.
- mit ρ < 2,600 g/cm³ eine geringe Dichte
- mit einem E-Modul E ≥ 74 eine hohe mechanische Festigkeit.
- eine Temperatur bei der Viskosität 10⁴ dPas von maximal 1350 °C, und eine Temperatur bei der Viskosität 10² dPas von maximal 1720 °C, was hinsichtlich der Heißformgebung sowie Schmelzbarkeit eine geeignete Viskositätskennlinie bedeutet. Die Gläser sind als Flachgläser mit den verschiedenen Ziehverfahren, z. B. Micro-sheet-Down-draw-, Up-draw-oder Over flow-fusion-Verfahren und in bevorzugter Ausführung, wenn sie frei von As₂O₃ und Sb₂O₃ sind, auch mit dem Floatverfahren herstellbar.
- eine hohe chemische Beständigkeit, dokumentiert durch gute Beständigkeit gegenüber Salzsäure ("Säurebeständigkeit HCl" mit einem Gewichtsverlust von < 0,7 mg/cm²) und gegenüber gepufferter Flußsäurelösung, was sie ausreichend inert gegen die bei der Herstellung von Flachbildschirmen verwendeten Chemikalien macht.
- mit n_{d} < 1,54, bevorzugt ≤ 1,531, einen geringen Brechwert. Diese Eigenschaft ist physikalische Grundlage für eine hohe Transmission.

Die Gläser weisen einen hohe Temperaturwechselbeständigkeit und eine gute Kristallisationsstabilität auf.

Damit sind die Gläser hervorragend geeignet für die Verwendung als Substratglas in der Displaytechnik, insbesondere für TFT-Displays, und in der Dünnschicht-Photovoltaik.

## Patentansprüche

1. Alkalifreies Aluminoborosilicatglas, das aus folgender Zusammensetzung (in Gew.-% auf Oxidbasis) besteht:
| | |
|---|---|
| SiO₂ | > 58 - 65 |
| B₂O₃ | > 6 - 11,5 |
| Al₂O₃ | > 14 - 20 |
| MgO | > 3 - 6 |
| CaO | > 4,5 - 10 |
| mit MgO/CaO | < 1 |
| SrO | 0 - 1,5 |
| BaO | > 1,5 - 6 |
| mit SrO + BaO | > 3 |
| ZnO | 0 - < 2 |
| ZrO₂ | 0 - 2 |
| TiO₂ | 0 - 2 |
| mit ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F⁻ | 0 - 1,5 |
| SO₄²⁻ | 0 - 1,5 |
| mit As₂O₃ + Sb₂O₃ + SnO₂ + CeO₂ + Cl⁻ + F⁻ + SO₄²⁻ | 0 - 1,5 |

2. Alkalifreies Aluminoborosilicatglas, das aus folgender Zusammensetzung (in Gew.-% auf Oxidbasis) besteht:
| | |
|---|---|
| SiO₂ | > 58 - 65 |
| B₂O₃ | > 6 - 11,5 |
| Al₂O₃ | > 14 - 20 |
| MgO | > 3 - 6 |
| CaO | > 4,5 - 10 |
| mit MgO/CaO | < 1 |
| SrO | 0 - < 4 |
| BaO | > 2,5 - 6 |
| mit SrO + BaO | > 3 |
| ZnO | 0 - 0,5 |
| ZrO₂ | 0 - 2 |
| TiO₂ | 0 - 2 |
| mit ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F | 0 - 1,5 |
| SO₄²⁻ | 0 - 1,5 |
| mit As₂O₃ + Sb₂O₃ + SnO₂ + CeO₂ + Cl⁻ + F + SO₄²⁻ | 0 - 1,5 |

3. Aluminoborosilicatglas nach Anspruch 1 oder 2,
**dadurch gekennzeichnet,**
**daß** das Glas höchstens 5 Gew.-% MgO enthält.

4. Aluminoborosilicatglas nach wenigstens einem der Ansprüche 1 bis 3,
**dadurch gekennzeichnet**,
da0 das Glas wenigstens 60 Gew.-% SiO₂ enthält.

5. Aluminoborosilicatglas nach wenigstens einem der Ansprüche 1 bis 4,
**dadurch gekennzeichnet,**
**daß** die Summe aus MgO, CaO, SrO und BaO mehr als 11 Gew.-% beträgt.

6. Aluminiumborosilicatglas nach wenigstens einem der Ansprüche 1 bis 5
**dadurch gekennzeichnet,**
**daß** es bis auf unvermeidliche Verunreinigungen frei ist von Arsenoxid und Antimonoxid und daß es auf einer Floatglasanlage herstellbar ist.

7. Aluminoborosilicatglas nach wenigstens einem der Ansprüche 1 bis 6, das einen thermischen Ausdehnungskoeffizienten α_{20/300} von 2,8 x 10⁻⁶/K - 3,9 x 10⁻⁶/K, eine Transformationstemperatur Tg ≥ 690 °C, eine Dichte ρ < 2,600 g/cm³ einen E-Modul E ≥ 74 Gpa, einen Brechwert < 1,54 und eine "Säurebeständigkeit HCI" < 0,7 mg/cm² aufweist.

8. Verwendung des Aluminoborosilicatglases nach wenigstens einem der Ansprüche 1 bis 7 als Substratglas in der Displaytechnik.

9. Verwendung des Aluminoborosilicatglases nach wenigstens einem der Ansprüche 1 bis 7 als Substratglas in der Dünnschicht-Photovoltaik.

## Claims

1. Alkali-free aluminoborosilicate glass which consists of the following composition (in % by weight, based on oxide):
| | |
|---|---|
| SiO₂ | > 58 - 65 |
| B₂O₃ | > 6 - 11.5 |
| Al₂O₃ | > 14 - 20 |
| MgO | > 3 - 6 |
| CaO | > 4.5 - 10 |
| with MgO/CaO | < 1 |
| SrO | 0 - 1.5 |
| BaO | > 1.5 - 6 |
| with SrO + BaO | > 3 |
| ZnO | 0 - < 2 |
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | 0 - 1.5 |
| SnO₂ | 0 - 1.5 |
| CeO₂ | 0 - 1.5 |
| Cl⁻ | 0 - 1.5 |
| F⁻ | 0 - 1.5 |
| SO₄²⁻ | 0 - 1.5 |
| with As₂O₃ + Sb₂O₃ + SnO₂ + CeO₂ + Cl⁻ + F⁻ + SO₄²⁻ | 0 - 1.5 |

2. Alkali-free aluminoborosilicate glass which consists of the following composition (in % by weight, based on oxide):
| | |
|---|---|
| SiO₂ | > 58 - 65 |
| B₂O₃ | > 6 - 11.5 |
| Al₂O₃ | > 14 - 20 |
| MgO | > 3 - 6 |
| CaO | > 4.5 - 10 |
| with MgO/CaO | < 1 |
| SrO | 0 - < 4 |
| BaO | > 2.5 - 6 |
| with SrO + BaO | > 3 |
| ZnO | 0 - 0.5 |
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | 0 - 1.5 |
| SnO₂ | 0 - 1.5 |
| CeO₂ | 0 - 1.5 |
| Cl⁻ | 0 - 1.5 |
| F- | 0 - 1.5 |
| SO₄²⁻ | 0 - 1.5 |
| with As₂O₃ + Sb₂O₃ + SnO₂ + CeO₂ + Cl⁻ + F⁻ + SO₄²⁻ | 0 - 1.5 |

3. Aluminoborosilicate glass according to Claim 1 or 2, **characterized in that** it comprises at most 5% by weight of MgO.

4. Aluminoborosilicate glass according to at least one of Claims 1 to 3, **characterized in that** it comprises at least 60% by weight of SiO₂.

5. Aluminoborosilicate glass according to at least one of Claims 1 to 4, **characterized in that** the sum of MgO, CaO, SrO and BaO is greater than 11% by weight.

6. Aluminoborosilicate glass according to at least one of Claims 1 to 5, **characterized in that** it is free of arsenic oxide and antimony oxide, apart from unavoidable impurities, and **in that** it can be produced in a float-glass plant.

7. Aluminoborosilicate glass according to at least one of Claims 1 to 6, which has a coefficient of thermal expansion α_{20/300} of 2.8 · 10⁻⁶/K - 3.9 · 10⁻⁶/K, a glass transition temperature Tg of ≥ 690°C, a density ρ of < 2.600 g/cm³, an E modulus E ≥ 74 GPa, a refractive index < 1.54 and an "acid resistance HCl" < 0.7 mg/cm².

8. Use of the aluminoborosilicate glass according to at least one of Claims 1 to 7 as substrate glass in display technology.

9. Use of the aluminoborosilicate glass according to at least one of Claims 1 to 7 as substrate glass in thin-film photovoltaics.

## Revendications

1. Verre aluminoborosilicaté exempt de métaux alcalins constitué par la composition suivante (en % en poids sur base d'oxydes) :
| | |
|---|---|
| SiO₂ | > 58 - 65 |
| B₂O₃ | > 6 - 11, 5 |
| Al₂O₃ | > 14 - 20 |
| MgO | > 3 - 6 |
| CaO | > 4, 5 - 10 |
| avec MgO/CaO | < 1 |
| SrO | 0 - 1,5 |
| BaO | > 1,5 - 6 |
| avec SrO + BaO | > 3 |
| ZnO | 0 - < 2 |
| ZrO₂ | 0 - 2 |
| TiO₂ | 0 - 2 |
| avec ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1, 5 |
| Cl⁻ | 0 - 1,5 |
| F⁻ | 0 - 1,5 |
| SO₄²⁻ | 0 - 1,5 |
| avec As₂O₃ + Sb₂O₃ + SnO₂ + CeO₂ + Cl⁻ + F⁻ + SO₄²⁻ | 0 - 1,5. |

2. Verre aluminoborosilicaté exempt de métaux alcalins, constitué par la composition suivante (en % en poids sur base d'oxydes) :
| | |
|---|---|
| SiO₂ | > 58 - 65 |
| B₂O₃ | > 6 - 11, 5 |
| Al₂O₃ | > 14 - 20 |
| MgO | > 3 - 6 |
| CaO | > 4,5 -10 |
| avec MgO/CaO | < 1 |
| SrO | 0 - < 4 |
| BaO | > 2,5 - 6 |
| avec SrO + BaO | > 3 |
| ZnO | 0 - 0,5 |
| ZrO₂ | 0 - 2 |
| TiO₂ | 0 - 2 |
| avec ZrO₂ + TiO₂ | 0 - 2 |
| As₂O₃ | 0 - 1,5 |
| Sb₂O₃ | 0 - 1, 5 |
| SnO₂ | 0 - 1,5 |
| CeO₂ | 0 - 1,5 |
| Cl⁻ | 0 - 1,5 |
| F⁻ | 0 - 1,5 |
| SO₄²⁻ | 0 - 1,5 |
| avec As₂O₃ + Sb₂O₃ + SnO₂ + CeO₂ + Cl⁻ + F⁻ + SO₄²⁻ | 0 - 1,5. |

3. Verre aluminoborosilicaté selon la revendication 1 ou 2, **caractérisé en ce que** le verre contient au maximum 5% en poids de MgO.

4. Verre aluminoborosilicaté selon au moins l'une quelconque des revendications 1 à 3, **caractérisé en ce que** le verre contient au moins 60% en poids de SiO₂.

5. Verre aluminoborosilicaté selon au moins l'une quelconque des revendications 1 à 4, **caractérisé en ce que** la somme de MgO, CaO, SrO et BaO est supérieure à 11% en poids.

6. Verre aluminoborosilicaté selon au moins l'une quelconque des revendications 1 à 5, **caractérisé en ce qu'**il est exempt, à d'inévitables impuretés près, d'oxyde d'arsenic et d'oxyde d'antimoine et **en ce qu'**il peut être fabriqué sur une installation de verre flotté.

7. Verre aluminoborosilicaté selon au moins l'une quelconque des revendications 1 à 6, qui présente un coefficient de dilatation thermique α_{20/300} de 2,8 x 10⁻⁶/K - 3,9 x 10⁻⁶/K, une température de transition vitreuse T_{g} ≥ 690°C, une densité ρ < 2,600 g/cm³, un module E ≥ 74 Gpa, un indice de réfraction < 1,54 et une "résistance aux acides HCl" < 0,7 mg/cm².

8. Utilisation du verre aluminoborosilicaté selon au moins l'une quelconque des revendications 1 à 7 comme verre de substrat dans la technique d'affichage.

9. Utilisation du verre aluminoborosilicaté selon au moins l'une quelconque des revendications 1 à 7 comme verre de substrat dans la technique photovoltaïque des couches minces.
